(19) Europäisches Patentamt
European Patent Office
Office européen des brevets

(11) EP 1 541 489 B1

(12) EUROPEAN PATENT SPECIFICATION

(45) Date of publication and mention of the grant of the patent:
**04.11.2015 Bulletin 2015/45**

(21) Application number: **03760943.5**

(22) Date of filing: **24.06.2003**

(51) Int Cl.:
***B65D 65/40*** $^{(2006.01)}$ ***B32B 27/38*** $^{(2006.01)}$
***C08G 59/56*** $^{(2006.01)}$

(86) International application number:
**PCT/JP2003/007977**

(87) International publication number:
**WO 2004/000681 (31.12.2003 Gazette 2004/01)**

# (54) GAS-BARRIER CONTAINERS

GASSPERRBEHÄLTER

CONTENEURS ETANCHES AUX GAZ

(84) Designated Contracting States:
**DE FR**

(30) Priority: **25.06.2002 JP 2002185151**
**25.06.2002 JP 2002185154**

(43) Date of publication of application:
**15.06.2005 Bulletin 2005/24**

(73) Proprietor: **MITSUBISHI GAS CHEMICAL COMPANY, INC.**
**Chiyoda-ku,**
**Tokyo 100-8324 (JP)**

(72) Inventors:
- **KOYAMA, Takeshi,**
**Mitsubishi Gas Chem. Co., Inc**
**Hiratsuka-shi,**
**Kanagawa 254-0016 (JP)**
- **KUTSUNA, Takaaki,**
**Mitsubishi Gas Chem. Co., Inc**
**Hiratsuka-shi,**
**Kanagawa 254-0016 (JP)**
- **KIHARA, Shuta,**
**Mitsubishi Gas Chem. Co., Inc.**
**Hiratsuka-shi,**
**Kanagawa 254-0016 (JP)**

(74) Representative: **Gille Hrabal**
**Brucknerstrasse 20**
**40593 Düsseldorf (DE)**

(56) References cited:

| | |
|---|---|
| EP-A- 1 219 656 | EP-A- 1 270 206 |
| WO-A-01/60701 | WO-A-95/26997 |
| WO-A-98/24839 | WO-A-99/12820 |
| JP-A- 2001 138 459 | JP-A- 2002 363 316 |
| JP-A- 2003 127 302 | JP-A- 2003 128 022 |
| US-A- 5 637 365 | US-A- 5 902 643 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 541 489 B1

## Description

### TECHNICAL FIELD

The present invention relates to gas-barrier containers suitably used for the purposes of receiving and preserving foods, beverages, drugs, and so on.

### BACKGROUND ART

In recent years, as packaging materials for receiving and preserving contents, plastic films or containers have been predominantly used because of excellent transparency, light weight and economical advantages.

Plastic containers have been produced by draw forming methods such as vacuum forming and pressure forming. The containers formed into sheets, cups or trays have been extensively used in various applications such as containers for foods or drugs.

The plastic containers used for packaging foods, drugs, etc., are required to have properties such as gas-barrier properties to various gases, aroma retention property, transparency, boiling resistance, retorting resistance, impact resistance, flexibility and heat-sealability. In particular, for the purposes of retaining properties and qualities of the contents, the containers are required to show high gas-barrier properties to oxygen and steam even under specific conditions including high-humidity condition and post-retort treatment condition.

Such gas-barrier containers have been usually produced by laminating a flexible polymer layer as a base material, a gas barrier layer and a flexible polymer sealant layer on each other to obtain a laminated sheet, and forming the thus obtained laminated sheet into a container shape.

Among them, as gas-barrier materials of the gas-barrier layer, there are well known ethylene-vinyl alcohol copolymers (EVOH resins). However, the gas-barrier property of the ethylene-vinyl alcohol copolymers largely depends upon humidity and, therefore, tends to be rapidly deteriorated depending upon kinds of contents to be packaged therein. In particular, when subjected to boiling or retorting treatment, the ethylene-vinyl alcohol copolymers show remarkable increase in oxygen penetration. Thus, the ethylene-vinyl alcohol copolymers are usable only in limited applications.

Recently, as containers for foods or beverages, hollow containers mainly made of polymers have been increasingly employed instead of conventional glass or metallic containers because of good transparency and light weight thereof.

However, the hollow containers mainly made of polymers are deteriorated in barrier property to oxygen or carbon dioxide as compared to those made of glass or metals, and are therefore unsuitable for preserving foods or beverages therein for a long period of time.

For these reasons, there have been proposed and practically used hollow containers having a multi-layer structure including a layer made of a gas-barrier resin such as polyamides. However, production of the multi-layer hollow containers inevitably requires the use of a molding machine having a complicated structure. Therefore, it has been demanded to develop gas-barrier hollow containers that can be produced more simply.

Also, conventionally, there is known the method of coating the hollow containers mainly made of polymers with polyvinylidene chloride (PVDC) resins. However, since the resins contain halogen atoms, the coated hollow containers tend to suffer from problems such as environmental pollution or disruption due to generation of harmful gases such as dioxin upon incineration thereof.

As alternative techniques usable instead of the above method, there have been proposed and partially practically used, for example, techniques for forming a thin film of carbon or silica on an inner surface of a stretch blow-molded hollow container made of polyesters such as polyethylene terephthalate which are now prevailing as containers for beverages by deposition or plasma discharge method to impart a gas barrier property thereto. However, the techniques must be conducted under high vacuum conditions and, therefore, inevitably require the use of large-scale apparatuses.

On the other hand, there are known non-halogen-based techniques using a polyamine-polyepoxide coating having a high amine-nitrogen content (Japanese Patent Laid-Open Publication No. Hei 7-112862/1995).

However, the gas-barrier property of the coating is not enough to preserve foods or beverages for a long period of time and tends to be deteriorated under high-humidity condition. Therefore, it has been required that the coating is further improved in gas-barrier property.

### DISCLOSURE OF THE INVENTION

An object of the present invention is to solve the above conventional problems and provide a gas-barrier container that is excellent in a gas-barrier property with a low humidity dependency as well as various other properties such as boiling resistance, retorting resistance, transparency, impact resistance and heat-sealability, and is usable for receiving foods, beverages and drugs for the purpose of preserving these contents.

As a result of extensive researches in view of the above object, the present inventors have found that when a

cured product made of a specific epoxy resin is used as a gas-barrier layer, the resultant container is excellent in not only a gas-barrier property, but also various other properties such as transparency, retorting resistance and impact resistance. The present invention has been accomplished on the basis of this finding.

That is, the present invention provides a gas-barrier container comprising at least one gas-barrier layer made of an epoxy resin cured product that is formed by curing an epoxy resin composition mainly containing an epoxy resin and an epoxy resin-curing agent, and contains a skeletal structure represented by the formula (1):

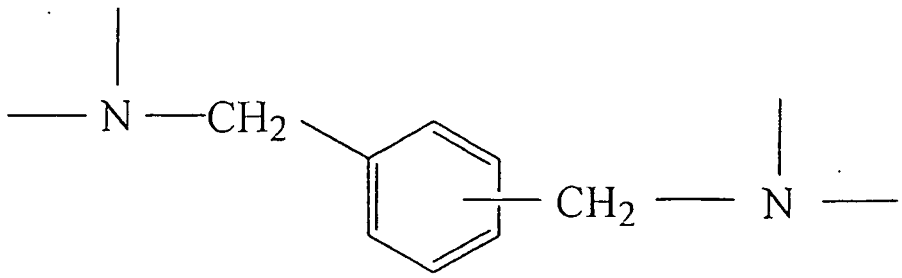

(1)

in an amount of 30% by weight or higher as defined in present claim 1.

PREFERRED EMBODIMENTS TO CARRY OUT THE INVENTION

The gas-barrier container of the present invention contains an epoxy resin cured product obtained by curing an epoxy resin composition composed mainly of an epoxy resin and an epoxy resin-curing agent. The gas-barrier container is in the form of a hollow container coated with the gas-barrier layer.

(Laminated Container)

The container obtained by molding a gas-barrier laminated film or laminated sheet including at least one flexible polymer layer and at least one gas-barrier layer is referred to as a "laminated container" (not according to the invention).

The flexible polymer layer used in the laminated container may be made of any film or sheet material as far as it can suitably retain or support the gas-barrier layer thereon. Examples of the film or sheet material for the flexible polymer layer include film or sheet materials made of polyolefin-based resins such as polyethylene and polypropylene; film or sheet materials made of polyester-based resins such as polyethylene terephthalate; film or sheet materials made of polyacrylonitrile-based resins; film or sheet materials made of polyamide-based resins such as nylon 6 and nylon 6.6; film or sheet materials made of poly(meth)acrylic resins; film or sheet materials made of polystyrene-based resins; film or sheet materials made of saponificated ethylene-vinyl acetate copolymer (EVOH)-based resins; and film or sheet materials made of polyvinyl alcohol-based resins. Of these materials, preferred are film or sheet materials made of polyolefin-based resins; film or sheet materials made of polyacrylonitrile-based resins; film or sheet materials made of polyamide-based resins; and film or sheet materials made of polystyrene-based resins.

In the case where a heat sealability is required for forming the container, the flexible polymer layer acts as a heat-sealable portion. In view of a good heat sealability, the flexible polymer layer is more preferably made of polyolefin-based resins such as polyethylene, polypropylene and ethylene-vinyl acetate copolymers.

These film or sheet materials for the flexible polymer layer may be stretched in a monoaxial or biaxial direction, or may be made of foamed polymers. The thickness of the flexible polymer layer is practically in the range of about 10 μm to 20 mm though it varies depending upon shapes of the film or sheet materials.

Further, the surface of the flexible polymer layer may be subjected to various surface treatments such as flame treatment and corona discharge treatment. These surface treatments can promote an adhesion between the flexible polymer layer as a base material and the gas-barrier layer. In addition, the thus appropriately surface-treated flexible polymer layer may be provided thereon with a printed layer, if desired. The printed layer may be produced by ordinary printing apparatuses used for printing on conventional polymer films, such as gravure printing machines, flexographic printing machines and offset printing machines. As ink forming the printed layer, there may also be employed various inks ordinarily used for forming a printed layer on conventional polymer films which are composed of pigments such as azo-based pigments and phthalocyanine-based pigments, resins such as rosins, polyamides and polyurethanes, and a solvent such as methanol, ethyl acetate and methyl ethyl ketone.

(Hollow Container)

The hollow container of the present invention means containers made of resins which have a hollow space

inside thereof such as bottles, trays and cups. The hollow containers may be made of any suitable resins as far as they can retain or support the gas-barrier layer formed from a coating material composed mainly of an epoxy resin and an epoxy resin-curing agent on a surface thereof. Of these resins, preferred are olefin-based resins such as polyethylene and polypropylene; polyester-based resins such as polyethylene terephthalate; polyacrylonitrile-based resins; polyamide-based resins such as nylon 6 and nylon 6.6; and polystyrene-based resins.

The hollow containers may be produced by conventionally known methods such as indirect methods of first obtaining a film or sheet and then forming the film or sheet into a hollow container; and direct methods of directly forming a hollow container such as direct-blow molding, injection-blow molding and stretch blow molding. Also, the hollow container formed by the above methods may have a multi-layer structure including a strength-retention layer, a sealant layer, a gas-barrier layer, etc., if desired. For example, the multi-layer film or sheet material used for forming such a multi-layered hollow container may be produced by a method of melt-extruding a polyolefin-based resin, etc., on a film or sheet made of a gas-barrier resin; a method of melt-extruding a gas-barrier resin on a layer made of a polyolefin-based resin, etc.; a method of co-extruding or co-injecting a gas-barrier resin together with a polyolefin-based resin, etc.; and a method of dry-laminating a film or sheet made of a gas-barrier resin and a film or sheet made of a polyolefin-based resin, etc., through a known adhesive made of organotitanium compounds, polyurethane compounds or epoxy compounds. The thus obtained multi-layer film or sheet may be formed into a hollow container having a desired shape by vacuum forming, pressure forming or vacuum pressure forming.

Also, the hollow container may be directly produced by a direct blow molding method, an injection blow molding method or a stretch blow molding method using the combination of a cold parison method and a hot parison method. The hollow container formed by these methods may have a multi-layer structure including a strength-retention layer and a gas-barrier layer, if desired. The multi-layer hollow container may also be produced by subjecting a multi-layer parison as a container preform to biaxial stretch blow molding. In addition, the multi-layer parison may be obtained, for example, by injecting a thermoplastic polyester resin and a polyamide MXD6 respectively from an injection cylinder through a mold hot liner into a mold cavity. The thus obtained biaxially-stretched blow-molded bottle may be subjected to heat-setting treatment in order to impart a good heat resistance thereto.

Examples of the polyolefin-based resins forming the hollow container include linear low-density polyethylene, low-density polyethylene, very low-density polyethylene, high-density polyethylene, ethylene-vinyl acetate copolymers and partially saponified products thereof, ionomers, ethylene-propylene (block or random) copolymers, ethylene-acrylic acid copolymers, ethylene-acrylic acid ester copolymers, ethylene-methacrylic acid copolymers, ethylene-methacrylic acid ester copolymers, polypropylene, propylene-$\alpha$-olefin copolymers, polybutene, polypentene and polymethylpentene. Of these polyolefin-based resins, especially preferred are linear low-density polyethylene, low-density polyethylene, high-density polyethylene, ethylene-propylene copolymers and polypropylene because of excellent mechanical properties thereof.

Examples of the polyester-based resins forming the hollow container include thermoplastic polyester resins containing as main repeating units ethylene terephthalate, butylene terephthalate and ethylene naphthalate, as well as copolymerized resins thereof.

As the acid component as a comonomer of the polyester-based resins, there may be used aromatic dicarboxylic acids such as isophthalic acid, diphenyl dicarboxylic acid, diphenoxyethane dicarboxylic acid, diphenylether dicarboxylic acid and diphenylsulfone dicarboxylic acid; aromatic polycarboxylic acids such as trimellitic acid and pyromellitic acid; alicyclic dicarboxylic acids such as hexahydroterephthalic acid and hexahydroisophthalic acid; and aliphatic dicarboxylic acids such as adipic acid, sebacic acid and azelaic acid.

Also, as the polyol component as a comonomer of the polyester resins, there may be used trimethylene glycol, tetramethylene glycol, hexamethylene glycol, decamethylene glycol, neopentylene glycol, diethylene glycol, 1,4-cyclohexane dimethanol, 1,3-bis(2-hydroxyethoxy)benzene, trimethylol propane and pentaerythritol.

The hollow container of the present invention may be subjected to various surface treatments such as flame treatment and corona discharge treatment in order to form a coating film as a gas-barrier layer having no defects such as tearing and cissing when applying a coating material thereto. These treatments can promote an adhesion between the hollow container and the gas-barrier layer.

(Gas-Barrier Layer)

The gas-barrier layer of the gas-barrier container according to the present invention contains an epoxy resin cured product formed by curing an epoxy resin composition composed mainly of an epoxy resin and an epoxy resin-curing agent.

In the gas-barrier container of the present invention, the epoxy resin cured product forming the gas-barrier layer contains a skeletal structure represented by the following formula (1) in an amount of 30% by weight or higher, preferably 45% by weight or higher and more preferably 50% by weight or higher. The epoxy resin cured product containing a large amount of the skeletal structure represented by the formula (1) can exhibit a high gas-barrier property.

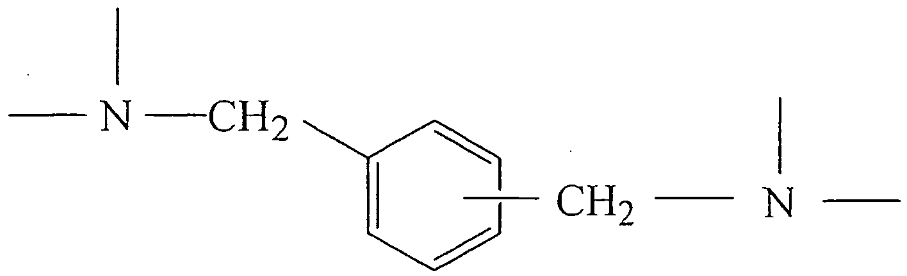

(1)

In addition, the gas-barrier layer of the gas-barrier container according to the present invention has an oxygen permeability of 2 mL·mm/m$^2$·day·MPa or lower as measured at a temperature of 23°C and a relative humidity of 60%.

Meanwhile, the oxygen permeability (P) of the gas-barrier layer may be determined, for example, by the following method. That is, after measuring an oxygen permeability of a laminated film composed of the gas-barrier layer and the flexible polymer layer, the oxygen permeability (P) is calculated from the following formula:

$$1/R = 1/Rn(n = 1, 2 \cdots) + DFT/P$$

wherein R is an oxygen transmission rate [mL/(m$^2$·day·MPa)] of the laminated film; Rn(n = 1, 2 ···) is an oxygen transmission rate [mL/(m$^2$·day·MPa)] of the respective flexible polymer layers; DFT is a thickness (mm) of the gas-barrier layer; and P is an oxygen permeability [mL·mm/(m$^2$·day·MPa)] of the gas-barrier layer.

Next, the epoxy resin and the epoxy resin-curing agent used in the gas barrier layer according to the present invention are explained in detail below.

(Epoxy Resin)

The epoxy resin used in the gas-barrier layer may be any of saturated or unsaturated aliphatic compounds, alicyclic compounds, aromatic compounds and heterocyclic compounds. In view of a high gas-barrier property, of these resins, preferred are epoxy resins containing an aromatic ring in a molecule thereof, and more preferred are epoxy resins containing the above skeletal structure represented by the formula (1) in a molecule thereof.

Specific examples of such an epoxy resin include epoxy resins containing glycidylamine moieties derived from m-xylylenediamine, epoxy resins containing glycidylamine moieties derived from 1,3-bis(aminomethyl)cyclohexane, epoxy resins containing glycidylamine moieties derived from diaminodiphenylmethane, epoxy resins containing glycidylamine moieties and/or glycidyl ether moieties derived from p-aminophenol, epoxy resins containing glycidyl ether moieties derived from bisphenol A, epoxy resins containing glycidyl ether moieties derived from bisphenol F, epoxy resins containing glycidyl ether moieties derived from phenol novolak, and epoxy resins containing glycidyl ether moieties derived from resorcinol.

Of these epoxy resins, preferred are epoxy resins containing glycidylamine moieties derived from m-xylylenediamine, epoxy resins containing glycidylamine moieties derived from 1,3-bis(aminomethyl)cyclohexane, epoxy resins containing glycidyl ether moieties derived from bisphenol F and epoxy resins containing glycidyl ether moieties derived from resorcinol.

Further, the epoxy resin more preferably contains as a main component the epoxy resin containing glycidyl ether moieties derived from bisphenol F or the epoxy resin containing glycidylamine moieties derived from m-xylylenediamine, and most preferably contains as a main component the epoxy resin containing glycidylamine moieties derived from m-xylylenediamine.

In addition, the epoxy resin may also be used in the form of a mixture containing any two or more of the above-described epoxy resins at appropriate mixing ratios, in order to improve various properties of the resultant product such as flexibility, impact resistance and wet heat resistance.

The above epoxy resin may be produced by reacting various alcohols, phenols or amines with epihalohydrin. For example, the epoxy resins containing glycidylamine moieties derived from m-xylylenediamine may be produced by the addition reaction of epichlorohydrin to m-xylylenediamine.

Here, the above glycidylamine moieties include mono-, di-, tri- and/or tetra-glycidylamine moieties that can be substituted with four hydrogen atoms of diamine in the xylylenediamine. The ratio between the mono-, di-, tri- and/or tetra-glycidylamine moieties can be altered by changing the ratio between m-xylylenediamine and epichlorohydrin to be reacted. For example, epoxy resins composed mainly of tetra-glycidylamine moieties are obtained by the addition reaction in which about 4 mol of epichlorohydrin is added to one mol of m-xylylenediamine.

More specifically, the epoxy resin used in the present invention may be synthesized by reacting various alcohols, phenols or amines with an excess amount of epihalohydrin in the presence of an alkali such as sodium hydroxide at a temperature of 20 to 140°C and preferably 50 to 120°C for the alcohols and phenols, and 20 to 70°C for the amines, and then separating the resultant alkali halide from the reaction mixture.

The number-average molecular weight of the thus produced epoxy resin varies depending upon the molar ratio of epichlorohydrin to various alcohols, phenols or amines, and is about 80 to 4,000, preferably about 200 to 1,000 and more preferably about 200 to 500.

(Epoxy Resin-Curing Agent)

As the epoxy resin-curing agent contained in the gas-barrier layer, there may be used reaction products of m-xylylenediamine with methyl (meth)acrylate.

The molar ratio between the components (A) and (B) to be reacted may be adjusted such that the ratio of the number of reactive functional groups contained in the component (B) to the number of amino groups contained in the component (A), is preferably in the range of 0.1 to 0.97. If the above ratio of the reactive functional groups is less than 0.1, a sufficient amount of the amido groups are not produced in the epoxy resin-curing agent, so that the resultant cured product may fail to show a high gas-barrier property and a good adhesion strength to various materials. On the other hand, if the ratio of the reactive functional groups exceeds 0.97, the amount of amino groups in the epoxy resin-curing agent which can be reacted with the epoxy resin becomes small, so that the resultant cured product may fail to exhibit excellent impact resistance and heat resistance and also tends to be deteriorated in solubility in various organic solvent and water.

The amido moieties introduced into the epoxy-curing agent by the above reaction exhibit a high coagulation force. Therefore, the use of the epoxy resin curing agent having a high content of the amido moieties allows the resultant cured product to show a still higher gas-barrier property and a good adhesion strength to the flexible polymer layer. Further, the epoxy resin-curing agents mentioned above may be used in the form of a mixture prepared by mixing any two or more thereof at an appropriate blending ratio in order to enhance various properties of the resultant cured product such as flexibility, impact resistance and wet heat resistance.

In particular, in the epoxy resin-curing agents used in the gas-barrier layer of the laminated container, after the reaction between the components (A) and (B) a part or whole of the unreacted component (A) is preferably removed therefrom.

The removal of the unreacted component (A) may be suitably conducted by distillation using a thin-film distillation apparatus, a distillation column or the like. Thus, the removal of the unreacted component (A) from the epoxy resin-curing agent prevents generation of gases upon aging, resulting in production of a good laminated container, and further prevents occurrence of malodor, resulting in production of a gas-barrier container suitable for foods.

In the present invention, the epoxy resin and the epoxy resin-curing agent as constituents of the gas barrier layer may be blended at standard ratios that are generally used for producing an epoxy resin cured product by the reaction between the epoxy resin and epoxy resin-curing agent. More specifically, the blending ratio between the epoxy resin and the epoxy resin-curing agent contained in the epoxy resin composition may be adjusted such that the equivalent ratio of active hydrogen atoms in the epoxy resin-curing agent to epoxy groups in the epoxy resin (active hydrogen/epoxy group) is in the range of 0.5 to 5.0 and preferably 0.8 to 3.0 when used as a coating material for hollow containers, and preferably in the range of 1.5 to 3.0 when used in laminated containers. When used in the laminated containers, if the above equivalent ratio of active hydrogen atoms (active hydrogen/epoxy group) is less than 1.5, the resultant gas-barrier material shows a too high crosslinking density and, therefore, tends to suffer from cracks or rupture upon thermoforming, resulting in poor gas-barrier property thereof. If the equivalent ratio of active hydrogen atoms (active hydrogen/epoxy group)exceeds 3.0, the resultant gas-barrier material shows a too low crosslinking density and tends to be deteriorated in adhesion to the flexible polymer layer as well as gas-barrier property.

Also, when the epoxy resin and the epoxy resin-curing agent are blended with each other, thermosetting resin compositions such as polyurethane-based resin compositions, polyacrylic resin compositions and polyurea-based resin compositions may be optionally added thereto according to the requirements unless the addition thereof adversely affects the effects of the present invention.

(Production of Laminated Container (not according to the invention))

The laminated container having the gas-barrier layer according to the present invention may be produced by preparing a coating solution containing an epoxy resin composition as a film-forming component composed of the epoxy resin and the epoxy resin-curing agent which forms the gas-barrier layer, and then applying the thus prepared coating solution to a surface of the flexible polymer layer of the laminated container, followed by drying or heat-treating, if desired. Alternatively, the laminated container may be produced by applying the epoxy resin composition as an adhesive which

is composed of the epoxy resin and the epoxy resin-curing agent and forms the gas-barrier layer, to a surface of the flexible polymer layer, followed by drying or heat-treating, if desired, and then laminating another flexible polymer layer thereon to form a film laminate or a sheet laminate. Namely, the laminate constituting the laminated container may have a two-layer structure composed of one gas-barrier layer and one flexible polymer layer, or a three- or more-layer structure composed of one gas-barrier layer and two or more flexible polymer layers.

Upon production of the laminated container according to the present invention, the coating solution may be prepared such that a concentration of the epoxy resin composition therein is sufficient to obtain an epoxy resin cured product. The concentration of the epoxy resin composition may vary depending upon starting materials as selected. More specifically, the concentration of the epoxy resin composition can be variously adjusted over a range of from the condition where no solvent is used to the condition where the composition is diluted to about 5% by weight dilute solution using a certain suitable organic solvent and/or water, according to kinds and molar ratios of the selected raw materials, etc.

Examples of the suitable organic solvent include glycol ethers such as 2-methoxyethanol, 2-ethoxyethanol, 2-propoxyethanol, 2-butoxyethanol, 1-methoxy-2-propanol, 1-ethoxy-2-propanol and 1-propoxy-2-propanol; alcohols such as methanol, ethanol, 1-propanol, 2-propanol, 1-butanol and 2-butanol; aprotonic polar solvents such as N,N-dimethylformamide, N,N-dimethylacetamide, dimethylsulfoxide and N-methylpyrrolidone; and non-aqueous solvents such as toluene, xylene and ethyl acetate. Of these solvents, preferred are relatively low-boiling solvents such as methanol and ethyl acetate.

When the coating solution is applied onto the flexible polymer layer as a base material, the coating solution may also optionally contain a wetting agent such as silicone and acrylic compounds to assist wetting of a surface of the base material. Examples of the suitable wetting agent include BYK331, BYK333, BYK348 and BYK3811 available from BYK Chemie GmbH. The wetting agent is preferably added in an amount of 0.01 to 2.0% by weight based on the total weight of the cured product-forming components in the coating solution.

In addition, the coating solution may also contain an inorganic filler such as silica, alumina, mica, talc, aluminum flakes and glass flakes in order to improve various properties of the resultant gas-barrier layer such as gas-barrier property and impact resistance. In view of transparency of the resultant film, the inorganic filler preferably has a flat-plate shape. The inorganic filler is preferably added in an amount of 0.01 to 10.0% by weight based on the total weight of the cured product-forming components in the coating solution.

Further, the coating solution may also optionally contain an oxygen-capturing compound, etc., according to requirements. Examples of the oxygen-capturing compound include low-molecular organic compounds capable of reacting with oxygen such as hindered phenols, vitamin C, vitamin E, organophosphorus compounds, gallic acid and pyrogallol, and transition metal compounds containing metals such as cobalt, manganese, nickel, iron and copper.

The coating solution may be applied onto the flexible polymer layer as a base material by any suitable coating methods ordinarily used for this purpose such as roll coating, spray coating, air-knife coating, dip coating and brush coating. Of these methods, preferred are roll coating and spray coating. For example, there may be used the same roll coating or spray coating techniques and facilities as ordinarily used for applying a curable coating material.

The gas-barrier layer obtained after applying the coating solution onto the flexible polymer layer as a base material and then drying and heat-treating the coating film, has a thickness of 0.1 to 100 $\mu$m and preferably 0.5 to 10 $\mu$m in view of practical use thereof. If the thickness of the gas-barrier layer is less than 0.1 $\mu$m, the resultant gas-barrier layer may fail to exhibit a sufficient gas-barrier property. On the other hand, if the thickness of the gas-barrier layer exceeds 100 $\mu$m, the obtained gas-barrier layer may fail to have a uniform thickness.

Also, in the gas-barrier container according to the present invention, in order to enhance an adhesion strength of the gas-barrier layer to various materials such as flexible polymers, the resin composition composed of the epoxy resin and the epoxy resin-curing agent may also contain a coupling agent such as silane coupling agents and titanium coupling agents. The coupling agent is preferably added in an amount of 0.01 to 5.0% by weight based on the total weight of the resin composition.

Further, the above resin composition may also optionally contain a tackifier such as xylene resins, terpene resins, phenol resins and rosin resins according to the requirements in order to enhance its adhesion strength to various film materials immediately after applying the composition to the respective film materials. The tackifier is preferably added in an amount of 0.01 to 5.0% by weight based on the total weight of the resin composition.

As the method of laminating the flexible polymer layer, etc., onto a surface of the gas-barrier layer to form a film laminate or a sheet laminate, there may be used conventionally known lamination methods such as dry lamination and extrusion lamination. More specifically, in the dry lamination method, a coating solution containing the epoxy resin composition as a film-forming component which is capable of forming the gas-barrier layer is applied onto a flexible polymer film as a base material, and then immediately after removing a solvent therefrom, another flexible polymer film is laminated thereon to form a laminated film. In this case, it is preferred that the thus obtained laminated film is aged at a temperature of from room temperature to 140°C for a period of about 5 s to 2 days according to the requirements, and then cured.

In the extrusion lamination method, a coating solution containing the epoxy resin composition as a film-forming

component which is capable of forming the gas-barrier layer is applied onto a flexible polymer film as a base material, and then dried and cured at a temperature of from room temperature to 140°C to remove a solvent therefrom and thereby form a gas-barrier layer. Then, a molten polymer material is laminated on the thus obtained laminated film by an extruder.

These processes and laminating methods may be used in combination with each other according to the requirements, and the layer structure of the obtained laminate may vary depending upon applications and configurations thereof.

Examples of the above laminate include films or sheets formed by applying the gas-barrier layer onto the flexible polymer layer, laminated sheets formed by melt-bonding the laminated film prepared by applying the gas-barrier layer onto the flexible polymer layer, to a sheet, laminated sheets formed by melt-bonding a film on which a flexible polymer is laminated through the gas-barrier layer as an adhesive, to a sheet, as well as various laminates such as those laminates formed by laminating at least two film or sheet materials on each other through the gas-barrier layer as an adhesive.

Further, the above laminate may also optionally contain a layer composed of an oxygen-capturing composition. Examples of the oxygen-capturing composition include compositions prepared by kneading a resin with low-molecular organic compounds capable of reacting with oxygen such as hindered phenols, vitamin C, vitamin E, organophosphorus compounds, gallic acid and pyrogallol or a metal powder such iron powder; and oxygen-absorbing resins prepared by adding transition metal compounds containing metals such as cobalt, manganese nickel, iron and copper as an oxidation catalyst to olefin-based polymers or oligomers having a carbon-to-carbon double bond in a molecule thereof such as polybutadiene, polyisoprene and butadiene/isoprene copolymers, or polyamides having a m-xylylene structure.

The gas-barrier container (laminated container) of the present invention may be produced by pressing and molding the above laminate into a desired shape by generally known heat-forming methods.

(Method of Coating the Hollow Container)

In the present invention, the hollow container coated with the gas-barrier layer may be produced by preparing a coating material containing the epoxy resin and the epoxy resin-curing agent which may be diluted, if desired, with a certain suitable organic solvent and/or water to form a coating solution, and then applying the thus prepared coating material or coating solution on the hollow container, followed by drying or heat-treating, if desired.

That is, the coating solution may be prepared such that a concentration of the coating material contained therein is sufficient to obtain an epoxy resin cured product. The concentration of the coating material contained in the coating solution may vary depending upon starting materials as selected. More specifically, the concentration of the coating material contained in the coating solution can be variously adjusted over a range of from the condition where no solvent is used to the condition where the coating material is diluted to about 5% by weight dilute solution using a certain suitable organic solvent and/or water according to kinds and molar ratios of the selected raw materials, etc. Similarly, the curing reaction temperature may vary over a broad range of from room temperature to about 140°C.

The organic solvent suitably used for forming the above dilute coating solution may be the same as used in the above coating solution for the laminated container. In addition, the coating solution may also optionally contain the wetting agents, inorganic fillers or oxygen-capturing compounds as mentioned above, if desired.

The coating solution may be applied onto the hollow container by any suitable coating methods ordinarily used for this purpose, such as roll coating, spray coating, air-knife coating, dip coating and brush coating. Of these methods, especially preferred is spray coating. For example, there may be used the same spray coating techniques and facilities as ordinarily used for applying a curable coating component.

The hollow container is coated with the coating solution such that the gas-barrier coating layer is formed over 60 to 100% of at least one of outer and inner surface areas of the hollow container. If the surface area of the hollow container which is coated with the gas-barrier layer is less than 60% on any of the outer and inner surfaces thereof, the resultant hollow container may fail to show a sufficient gas-barrier property.

The hollow container is required to have a still higher gas-barrier property according to kinds of foods or beverages to be filled therein. For example, in the case where the hollow container is filled with beer, the inclusion of only 1 ppm oxygen into beer tends to cause deterioration in flavor thereof. In the case of a stretch blow-molded container made of polyethylene terephthalate which has a capacity of 500 mL and a surface area of 0.04 $m^2$, it is required to control an oxygen transmission rate thereof to about 0.02 to 0.04 mL per day in an atmospheric air (0.02 to 0.04 mL/bottle·day·0.02 MPa). In this case, the time required until an amount of oxygen penetrated into the container through a wall thereof reaches 1 ppm based on the contents of the container is 1 to 2 weeks. In order to extend the time taken until an amount of oxygen penetrated into the container through a wall thereof reaches 1 ppm based on the contents of the container twice or more, i.e., in order to prolong a life of goods to be filled therein up to 2 to 4 weeks, it is required to form the gas-barrier coating layer on about 60% or more of the surface area of the hollow container.

The thickness of the gas-barrier layer formed by applying the coating solution onto the hollow container and then drying or heat-treating the resultant coating film is 1 to 100 μm and preferably 5 to 50 μm in view of practical use thereof. If the thickness of the gas-barrier layer is less than 1 μm, the resultant hollow container may fail to show a

sufficient gas-barrier property. On the other hand, if the thickness of the gas-barrier layer exceeds 100 μm, the obtained gas-barrier layer may fail to have a uniform thickness.

The present invention will be described in more detail by reference to the following examples. However, it should be noted that the following examples are only illustrative and not intended to limit the invention thereto.

A: Laminated Container (not according to the invention)

(Evaluation Methods)

(1) Oxygen Transmission Rate (mL/package-day-0.02 MPa)

The oxygen transmission rate of the laminated container was measured at a temperature of 23°C, a relative humidity of 100% inside of the container and a relative humidity of 60% outside of the container using an oxygen transmission rate measuring device "OX-TRAN 10/50A" available from Modern Control Inc., according to ASTM D3985, thereby evaluating a gas-barrier property of the laminated container.

(2) Appearance of Molded Article

The appearance of the molded article was visually observed and evaluated.

(3) Odor

The molded article was heated at 80°C for 30 min to evaluate whether or not any odor was generated therefrom.

(Production of Epoxy Resin-Curing Agent)

Epoxy Resin-Curing Agent A

One mole of m-xylylenediamine was charged into a reactor and heated to 60°C under a nitrogen flow, and then 0.25 mol of methyl acrylate was dropped into the reactor for one hour. After completion of the dropping, the reaction mixture was stirred at 120°C for one hour, and further heated to 180°C for 3 h while distilling off methanol as produced. Then, the resultant reaction solution was cooled to 100°C, and an appropriate amount of methanol was added to the solution so as to adjust the solid content thereof to 70% by weight, thereby obtaining an epoxy resin-curing agent A. The thus obtained epoxy resin-curing agent A had an active hydrogen equivalent of 46.

Epoxy Resin-Curing Agent B

One mole of m-xylylenediamine was charged into a reactor and heated to 60°C under a nitrogen flow, and then 0.25 mol of methyl acrylate was dropped into the reactor for one hour. After completion of the dropping, the reaction mixture was stirred at 120°C for one hour, and further heated to 180°C for 3 h while distilling off methanol as produced. The unreacted m-xylylenediamine contained in the reaction solution was removed at 180°C/1 Torr (0.13 kPa) using a thin-film distillation apparatus. As a result, it was confirmed that the unreacted m-xylylenediamine was recovered in an amount of 40% by weight in the reaction solution. Then, an appropriate amount of methanol was added to the reaction solution so as to adjust the solid content therein to 70% by weight, thereby obtaining an epoxy resin-curing agent B. The thus obtained epoxy resin-curing agent B had an active hydrogen equivalent of 56.

Epoxy Resin-Curing Agent C

One mole of m-xylylenediamine was charged into a reactor and heated to 60°C under a nitrogen flow, and then 0.50 mol of methyl acrylate was dropped into the reactor for one hour. After completion of the dropping, the reaction mixture was stirred at 120°C for one hour, and further heated to 180°C for 3 h while distilling off methanol as produced. Then, the resultant reaction solution was cooled to 100°C, thereby obtaining an epoxy resin-curing agent C. The thus obtained epoxy resin-curing agent C had an active hydrogen equivalent of 65.

Epoxy Resin-Curing Agent D

One mole of m-xylylenediamine was charged into a reactor and heated to 60°C under a nitrogen flow, and then 0.50 mol of methyl acrylate was dropped into the reactor for one hour. After completion of the dropping, the reaction

mixture was stirred at 120°C for one hour, and further heated to 180°C for 3 h while distilling off methanol as produced. The unreacted m-xylylenediamine contained in the reaction solution was removed at 180°C/1 Torr (0.13 kPa) using a thin-film distillation apparatus. As a result, it was confirmed that the unreacted m-xylylenediamine was recovered in an amount of 16% by weight in the reaction solution. Then, an appropriate amount of methanol was added to the reaction solution so as to adjust the solid content therein to 70% by weight, thereby obtaining an epoxy resin-curing agent D. The thus obtained epoxy resin-curing agent D had an active hydrogen equivalent of 77.

EXAMPLE 1

Fifty parts by weight of an epoxy resin having glycidylamine moieties derived from m-xylylenediamine ("TETRAD-X" available from Mitsubishi Gas Chemical Co., Ltd.; epoxy group equivalent: 99) and 90 parts by weight of the epoxy resin-curing agent A were diluted with 237 parts by weight of a 1:1 methanol/ethyl acetate mixed solvent to prepare an adhesive having a solid content of 35% by weight. The thus prepared adhesive was mixed with 0.02 part by weight of an acrylic wetting agent "BYK381" available from BYK Chemie GmbH, and intimately stirred together to prepare a coating solution. At this time, the equivalent ratio of active hydrogen atoms in the epoxy resin-curing agent A to epoxy groups in the epoxy resin (active hydrogen/epoxy group) was 2.5. The thus obtained coating solution was applied onto a 25 μm-thick polypropylene film "PYREN" available from Toyobo Co., Ltd., using a bar coater No. 6 in a coating amount of 3 g/$m^2$ (solid content), dried at 80°C for 30 s, laminated on a 30 μm-thick linear low-density polyethylene film "RIX" available from Toyobo Co., Ltd., using nip rolls, and then aged at 35°C for one day to obtain a laminated film. It was confirmed that the content of the skeletal structure represented by the formula (1) in the resultant epoxy resin cured product was 65.4% by weight.

A 2 mm-thick polypropylene sheet and the above laminated film were overlapped on each other such that the former sheet faced to a polypropylene film side of the latter film, and then heat-sealed together. Then, the thus obtained laminated film was thermoformed into a flat dish-shaped container having an inner surface area of 0.027 $m^2$. It was confirmed that the thus obtained container had a good appearance and a very slight odor. The oxygen transmission rate of the container as measured is shown in Table 1.

EXAMPLE 2

Fifty parts by weight of an epoxy resin having glycidylamine moieties derived from m-xylylenediamine ("TETRAD-X" available from Mitsubishi Gas Chemical Co., Ltd.; epoxy group equivalent: 99) and 110 parts by weight of the epoxy resin-curing agent B were diluted with 263 parts by weight of a 1:1 methanol/ethyl acetate mixed solvent to prepare an adhesive having a solid content of 35% by weight. The thus prepared adhesive was mixed with 0.02 part by weight of an acrylic wetting agent "BYK381" available from BYK Chemie GmbH, and intimately stirred together to prepare a coating solution. At this time, the equivalent ratio of active hydrogen atoms in the epoxy resin-curing agent B to epoxy groups in the epoxy resin (active hydrogen/epoxy group) was 2.5. The thus obtained coating solution was applied onto a 25 μm-thick polypropylene film "PYREN" available from Toyobo Co., Ltd., using a bar coater No. 6 in a coating amount of 3 g/$m^2$ (solid content), dried at 80°C for 30 s, laminated on a 30 μm-thick linear low-density polyethylene film "RIX" available from Toyobo Co., Ltd., using nip rolls, and then aged at 35°C for one day to obtain a laminated film. It was confirmed that the content of the skeletal structure represented by the formula (1) in the resultant epoxy resin cured product was 68.0% by weight. Then, the thus obtained laminated film was thermoformed into a flat dish-shaped container by the same method as in Example 1. It was confirmed that the thus obtained container had a good appearance, and exhibited no odor since the unreacted m-xylylenediamine (A) was removed upon production of the epoxy resin-curing agent. The oxygen transmission rate of the container as measured is shown in Table 1.

EXAMPLE 3

Fifty parts by weight of an epoxy resin having glycidylamine moieties derived from m-xylylenediamine ("TETRAD-X" available from Mitsubishi Gas Chemical Co., Ltd.; epoxy group equivalent: 99) and 129 parts by weight of the epoxy resin-curing agent C were diluted with 289 parts by weight of a 1:1 methanol/ethyl acetate mixed solvent to prepare an adhesive having a solid content of 35% by weight. The thus prepared adhesive was mixed with 0.02 part by weight of an acrylic wetting agent "BYK381" available from BYK Chemie GmbH, and intimately stirred together to prepare a coating solution. At this time, the equivalent ratio of active hydrogen atoms in the epoxy resin-curing agent C to epoxy groups in the epoxy resin (active hydrogen/epoxy group) was 2.5. The thus obtained coating solution was applied onto a 25 μm-thick polypropylene film "PYREN" available from Toyobo Co., Ltd., using a bar coater No. 6 in a coating amount of 3 g/$m^2$ (solid content), dried at 80°C for 30 s, laminated on a 30 μm-thick linear low-density polyethylene film "RIX" available from Toyobo Co., Ltd., using nip rolls, and then aged at 35°C for one day to obtain a laminated film. It was confirmed that the content of the skeletal structure represented by the formula (1) in the resultant epoxy resin cured

product was 69.9% by weight. Then, the thus obtained laminated film was thermoformed into a flat dish-shaped container by the same method as in Example 1. It was confirmed that the thus obtained container had a good appearance and a very slight odor. The oxygen transmission rate of the container as measured is shown in Table 1.

EXAMPLE 4

Fifty parts by weight of an epoxy resin having glycidylamine moieties derived from m-xylylenediamine ("TETRAD-X" available from Mitsubishi Gas Chemical Co., Ltd.; epoxy group equivalent: 99) and 153 parts by weight of the epoxy resin-curing agent D were diluted with 321 parts by weight of a 1:1 methanol/ethyl acetate mixed solvent to prepare an adhesive having a solid content of 35% by weight. The thus prepared adhesive was mixed with 0.02 part by weight of an acrylic wetting agent "BYK381" available from BYK Chemie GmbH, and intimately stirred together to prepare a coating solution. At this time, the equivalent ratio of active hydrogen atoms in the epoxy resin-curing agent D to epoxy groups in the epoxy resin (active hydrogen/epoxy group) was 2.5. The thus obtained coating solution was applied onto a 25μ m-thick polypropylene film "PYREN" available from Toyobo Co., Ltd., using a bar coater No. 6 in a coating amount of 3 $g/m^2$ (solid content), dried at 80°C for 30 s, laminated on a 30 μm-thick linear low-density polyethylene film "RIX" available from Toyobo Co., Ltd., using nip rolls, and then aged at 35°C for one day to obtain a laminated film. It was confirmed that the content of the skeletal structure represented by the formula (1) in the resultant epoxy resin cured product was 71.9% by weight. Then, the thus obtained laminated film was thermoformed into a flat dish-shaped container by the same method as in Example 1. It was confirmed that the thus obtained container had a good appearance, and exhibited no odor since the unreacted m-xylylenediamine (A) was removed upon production of the epoxy resin-curing agent. The oxygen transmission rate of the container as measured is shown in Table 1.

COMPARATIVE EXAMPLE 1

A laminated film composed of a 25 μm-thick polypropylene film, a 12 μm-thick ethylene-vinyl alcohol copolymer film and a 30 μm-thick linear low-density polyethylene film was overlapped on a 2 mm-thick polypropylene sheet such that the polypropylene film side of the laminated film faced to the 2 mm-thick polypropylene sheet, and then heat-sealed together. The thus obtained laminated film was thermoformed into a flat dish-shaped container by the same method as in Example 1. It was confirmed that the thus obtained container had a good appearance. The oxygen transmission rate of the container as measured is shown in Table 1.

TABLE 1

| | Oxygen Transmission Rate (mL/package·day·0.02 MPa) |
|---|---|
| Example 1 | 0.5 |
| Example 2 | 0.2 |
| Example 3 | 0.6 |
| Example 4 | 0.3 |
| Comparative Example 1 | 2 |

B: Coating of Hollow Container

(Evaluation Methods)

(1) Oxygen Transmission Rate (mL/bottle-day-0.02 MPa)

The oxygen transmission rate of the hollow container was measured at a temperature of 23°C, a relative humidity of 100% inside of the container and a relative humidity of 50% outside of the container using an oxygen transmission rate measuring device "OX-TRAN 10/50A" available from Modern Control Inc., according to ASTM D3985, thereby evaluating a gas-barrier property of the hollow container.

(2) Transparency (difference in haze)

A sample of the bottle was cut from its barrel portion to measure a haze thereof using a haze measuring apparatus "ZE-2000" available from Nippon Denshoku Kogyo Co., Ltd., according to ASTM D1003. The transparency

of the bottle was evaluated from the difference in haze obtained by subtracting the haze value before coating from that after coating.

(Molding of Hollow Container)

(1) Stretch Blow-Molded Bottle

Polyethylene terephthalate (PET; available from Nippon Unipet Co., Ltd.; tradename: RT543C) having an intrinsic viscosity of 0.75 was injection-molded under the following conditions to obtain a parison.

Injection cylinder: 270°C; Resin flow path in mold: 270°C as mold temp.
Cooling water: 15°C
Shape of parison: overall length: 80 mm; outer diameter: 23.5 mmϕ; wall thickness: 4.5 mm

Then, the thus obtained parison was subjected to biaxial stretch blow molding under the following conditions using a biaxial stretch blow-molding machine to obtain a bottle-shaped hollow container (stretch blow-molded bottle A).

Parison heating temperature: 100°C; Blowing pressure: 3.0 MPa
Shape of container: Weight: 30 g; Average thickness: 0.4 mm
Capacity: 500 mL; Surface area: 0.04 $m^2$

(2) Direct Blow-Molded Bottle

A random-copolymerized polypropylene ("X0235" available from Chisso Co., Ltd.; MFR: 0.6) was blow-molded under the following conditions to obtain a direct blow-molded bottle B.

Blow molding machine: Screw diameter: 40 mm; L/D: 24
Cylinder temperature: 240°C; Die temperature: 210°C
Air-blowing pressure: 0.3 MPa; Air-blowing time: 15 s
Mold temperature: 30°C
Shape of container: Weight: 20 g; Average thickness: 0.4 mm
Capacity: 500 mL; Surface area: 0.04 $m^2$

(Production of Epoxy Resin-Curing Agent)

<u>Epoxy Resin-Curing Agent E</u>

One mole of m-xylylenediamine was charged into a reactor and heated to 60°C under a nitrogen flow, and then 0.67 mol of methyl acrylate was dropped into the reactor for one hour. After completion of the dropping, the reaction mixture was stirred at 120°C for one hour, and further heated to 180°C for 3 h while distilling off methanol as produced. Then, the resultant reaction solution was cooled to 100°C, and an appropriate amount of methanol was added to the reaction solution so as to adjust the solid content therein to 70% by weight, thereby obtaining an epoxy resin-curing agent E.

<u>Epoxy Resin-Curing Agent F</u>

One mole of m-xylylenediamine was charged into a reactor and heated to 60°C under a nitrogen flow, and then 0.50 mol of methyl acrylate was dropped into the reactor for one hour. After completion of the dropping, the reaction mixture was stirred at 120°C for one hour, and further heated to 180°C for 3 h while distilling off methanol as produced. Then, the resultant reaction solution was cooled to 100°C, thereby obtaining an epoxy resin-curing agent F.

<u>Epoxy Resin-Curing Agent G</u>

One mole of m-xylylenediamine was charged into a reactor and heated to 120°C under a nitrogen flow, and then 0.50 mol of methyl acrylate was dropped into the reactor for one hour. The obtained reaction mixture was stirred at 120°C for 0.5 hour. Further, after 0.17 mol of malic acid was slowly added to the reactor, the obtained reaction mixture was stirred for 0.5 hour and then heated to 180°C for 3 h while distilling off methanol as produced. Then, the resultant reaction solution was cooled to 100°C, and an appropriate amount of methanol was added to the reaction solution so

as to adjust the solid content therein to 70% by weight, thereby obtaining an epoxy resin-curing agent G.

Epoxy Resin-Curing Agent H

One mole of m-xylylenediamine was charged into a reactor and heated to 120°C under a nitrogen flow, and then 0.67 mol of methyl acrylate was dropped into the reactor for one hour. The obtained reaction mixture was stirred at 120°C for 0.5 hour. Further, after 0.33 mol of acetic acid was dropped into the reactor for 0.5 hour, the obtained reaction mixture was stirred for one hour and then heated to 180°C for 3 h while distilling off methanol as produced. Then, the resultant reaction solution was cooled to 100°C, and an appropriate amount of methanol was added to the reaction solution so as to adjust the solid content therein to 70% by weight, thereby obtaining an epoxy resin-curing agent H.

Epoxy Resin-Curing Agent I

One mole of tetraethylenepentamine was charged into a reactor and heated to 100°C under a nitrogen flow, and then 0.4 mol of an epoxy resin having glycidyl ether moieties derived from bisphenol A ("EPICOAT 828" available from Japan Epoxy Resin Co., Ltd.) was dropped into the reactor for one hour, and the resultant mixture was further stirred for 2 h. Then, an appropriate amount of methanol was added to the reaction solution so as to adjust the solid content therein to 40% by weight, thereby obtaining an epoxy resin-curing agent I.

EXAMPLE 5

A 1:1 methanol/ethyl acetate solution (solid content: 30% by weight) containing 90 parts by weight of the epoxy resin-curing agent E and 50 parts by weight of an epoxy resin having glycidylamine moieties derived from m-xylylenediamine ("TETRAD-X" available from Mitsubishi Gas Chemical Co., Ltd.) was prepared, and then the thus obtained solution was mixed with 0.02 part by weight of an acrylic wetting agent "BYK381" available from BYK Chemie GmbH, and intimately stirred together to prepare a coating solution A (content of the skeletal structure represented by the formula (1) in the epoxy resin cured product: 59.0% by weight). The thus obtained coating solution A was sprayed onto an outer surface of the stretch blow-molded bottle A except for a mouth portion thereof, and then cured at 60°C for 30 min. It was confirmed that the coated surface area of the bottle A was 95% of a total outer surface area thereof, and an average thickness of the resultant coating layer was 20 μm. The thus obtained bottle coated with the gas-barrier layer was subjected to evaluation of an oxygen-barrier property and transparency (difference in haze) thereof. The results are shown in Table 2.

EXAMPLE 6

The same procedure as in EXAMPLE 5 was repeated except for using 66 parts by weight of the epoxy resin-curing agent F instead of the epoxy resin-curing agent E to prepare a coating solution B (content of the skeletal structure represented by the formula (1) in the epoxy resin cured product: 58.0% by weight), thereby producing a bottle coated with a gas-barrier layer and evaluating properties thereof. The results are shown in Table 2.

EXAMPLE 7

The same procedure as in EXAMPLE 5 was repeated except for using 70 parts by weight of a reaction product obtained by reacting m-xylylenediamine with methyl methacrylate at a molar ratio of about 2:1("GASKAMINE 340" available from Mitsubishi Gas Chemical Co., Ltd.) instead of the epoxy resin-curing agent E to prepare a coating solution C (content of the skeletal structure represented by the formula (1) in the epoxy resin cured product: 57.0% by weight), thereby producing a bottle coated with a gas-barrier layer and evaluating properties thereof. The results are shown in Table 2.

EXAMPLE 8

The same procedure as in EXAMPLE 5 was repeated except for using 100 parts by weight of the epoxy resin-curing agent G instead of the epoxy resin-curing agent E to prepare a coating solution D (content of the skeletal structure represented by the formula (1) in the epoxy resin cured product: 56.5% by weight), thereby producing a bottle coated with a gas-barrier layer and evaluating properties thereof. The results are shown in Table 2.

EXAMPLE 9

The same procedure as in EXAMPLE 5 was repeated except for using 144 parts by weight of the epoxy resin-curing agent H instead of the epoxy resin-curing agent E to prepare a coating solution E (content of the skeletal structure represented by the formula (1) in the epoxy resin cured product: 59.6% by weight), thereby producing a bottle coated with a gas-barrier layer and evaluating properties thereof. The results are shown in Table 2.

EXAMPLE 10

The same procedure as in EXAMPLE 5 was repeated except for using 50 parts by weight of an epoxy resin having glycidyl ether moieties derived from bisphenol F instead of the epoxy resin having glycidyl amine moieties derived from m-xylylenediamine, and using the epoxy resin-curing agent E in an amount of 77 parts by weight to prepare a coating solution F (content of the skeletal structure represented by the formula (1) in the epoxy resin cured product: 39.8% by weight), thereby producing a bottle coated with a gas-barrier layer and evaluating properties thereof. The results are shown in Table 2.

EXAMPLE 11

The same procedure as in EXAMPLE 5 was repeated except that the coated surface area of the bottle was 75% of the total surface area thereof, thereby producing a bottle coated with a gas-barrier layer and evaluating properties thereof. The results are shown in Table 2.

EXAMPLE 12

The same procedure as in EXAMPLE 5 was repeated except that the coated surface area of the bottle was 65% of the total surface area thereof, thereby producing a bottle coated with a gas-barrier layer and evaluating properties thereof. The results are shown in Table 2.

COMPARATIVE EXAMPLE 2

The same procedure as in EXAMPLE 5 was repeated except for using 50 parts by weight of an epoxy resin having glycidyl ether moieties derived from bisphenol A ("EPICOAT 828" available from Japan Epoxy Resin Co., Ltd.) instead of the epoxy resin having glycidyl amine moieties derived from m-xylylenediamine, and using 27 parts by weight of the epoxy resin-curing agent I instead of the epoxy resin-curing agent E to prepare a coating solution G (content of the skeletal structure represented by the formula (1) in the epoxy resin cured product: 0.0% by weight), thereby producing a coated bottle and evaluating properties thereof. The results are shown in Table 2.

COMPARATIVE EXAMPLE 3

The same procedure as in EXAMPLE 5 was repeated except for using the stretch blow-molded bottle A provided with no coating layer, and properties thereof were evaluated. The results are shown in Table 2.

COMPARATIVE EXAMPLE 4

The same procedure as in EXAMPLE 5 was repeated except that the coated surface area of the bottle was 50% of the total surface area thereof, thereby producing a coated bottle and evaluating properties thereof. The results are shown in Table 2.

TABLE 2

| | Coating solution | Coating rate (%) | Oxygen Transmission Rate (mL/bottle-day-0.02 MPa) | Difference in haze (%) |
|---|---|---|---|---|
| Example 5 | A | 95 | 0.008 | <5 |
| Example 6 | B | 95 | 0.010 | <5 |
| Example 7 | C | 95 | 0.012 | <5 |
| Example 8 | D | 95 | 0.007 | <5 |

(continued)

| | Coating solution | Coating rate (%) | Oxygen Transmission Rate (mL/bottle-day-0.02 MPa) | Difference in haze (%) |
|---|---|---|---|---|
| Example 9 | E | 95 | 0.009 | <5 |
| Example 10 | F | 95 | 0.015 | <5 |
| Example 11 | A | 75 | 0.013 | <5 |
| Example 12 | A | 65 | 0.016 | <5 |
| Comparative Example 2 | G | 95 | 0.019 | <5 |
| Comparative Example 3 | None | 0 | 0.032 | - |
| Comparative Example 4 | A | 50 | 0.019 | <5 |

EXAMPLE 13

The same procedure as in EXAMPLE 5 was repeated except for using the direct blow-molded bottle B instead of the stretch blow-molded bottle A, thereby producing a bottle coated with a gas-barrier layer and evaluating properties thereof. The results are shown in Table 3.

EXAMPLE 14

The same procedure as in EXAMPLE 13 was repeated except that the coated surface area of the bottle was 75% of the total surface area thereof, thereby producing a bottle coated with a gas-barrier layer and evaluating properties thereof. The results are shown in Table 3.

EXAMPLE 15

The same procedure as in EXAMPLE 13 was repeated except that the coated surface area of the bottle was 60% of the total surface area thereof, thereby producing a bottle coated with a gas-barrier layer and evaluating properties thereof. The results are shown in Table 3.

COMPARATIVE EXAMPLE 5

The same procedure as in EXAMPLE 13 was repeated except for using the direct blow-molded bottle B provided with no coating layer, and properties thereof were evaluated. The results are shown in Table 3.

COMPARATIVE EXAMPLE 6

The same procedure as in EXAMPLE 13 was repeated except that the coated surface area of the bottle was 50% of the total surface area thereof, thereby producing a coated bottle and evaluating properties thereof. The results are shown in Table 3.

TABLE 3

| | Coating solution | Coating rate (%) | Oxygen Transmission Rate (mL/bottle·day· 0.02 MPa) | Difference in haze (%) |
|---|---|---|---|---|
| Example 13 | A | 95 | 0.06 | <5 |
| Example 14 | A | 75 | 0.27 | <5 |
| Example 15 | A | 60 | 0.42 | <5 |
| Comparative Example 5 | None | - | 1.05 | - |

(continued)

| | Coating solution | Coating rate (%) | Oxygen Transmission Rate (mL/bottle·day· 0.02 MPa) | Difference in haze (%) |
|---|---|---|---|---|
| Comparative Example 6 | A | 50 | 0.53 | <5 |

INDUSTRIAL APPLICABILITY

The gas-barrier container according to the present invention has a less burden to environment due to the use of non-halogen gas-barrier material therein, and is excellent in economical efficiency and workability in production process thereof.

Further, the gas-barrier container according to the present invention can exhibit a high gas-barrier property and is excellent in various properties such as interlaminar adhesion strength, gas-barrier property under a high-humidity condition, impact resistance and retorting resistance. Therefore, the gas-barrier container according to the present invention can be used in various applications such as containers for foods or beverages which require a high gas-barrier property as well as packaging materials for drugs.

## Claims

1. A gas-barrier container comprising at least one gas-barrier layer made of an epoxy resin cured product that is formed by curing an epoxy resin composition mainly containing an epoxy resin and an epoxy resin-curing agent, and contains a skeletal structure represented by the formula (1):

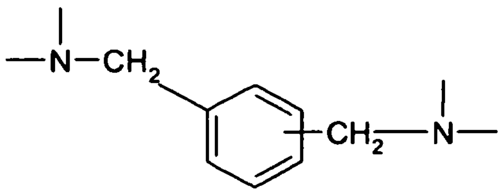

(1)

in an amount of 30% by weight or higher, wherein the gas-barrier layer has an oxygen permeability of 2 mL· mm/$m^2$· day MPa or lower as measured at a temperature of 23°C and a relative humidity of 60%, wherein the epoxy resin contains, as a main component, the epoxy resin containing glycidylamine moieties derived from m-xylylenediamine, **characterized in that**
the epoxy resin-curing agent is a reaction product of m-xylylenediamine with methyl (meth) acrylate, and
that the container is in the form of a hollow container in which 60 to 100% of a surface area of at least one of an outer surface and an inner surface thereof is coated with the gas-barrier layer.

2. The gas-barrier container according to claim 1, wherein the epoxy resin contains, as a main component, at least one resin selected from the group consisting of epoxy resins containing glycidylamine moieties derived from m-xylylenediamine, epoxy resins containing glycidylamine moieties derived from 1,3-bis(aminomethyl)cyclohexane, epoxy resins containing glycidylamine moieties derived from diaminodiphenylmethane, epoxy resins containing glycidylamine moieties and/or glycidyl ether moieties derived from p-aminophenol, epoxy resins containing glycidyl ether moieties derived from bisphenol A, epoxy resins containing glycidyl ether moieties derived from bisphenol F, epoxy resins containing glycidyl ether moieties derived from phenol novolak, and epoxy resins containing glycidyl ether moieties derived from resorcinol.

3. The gas-barrier container according to claim 2, wherein the epoxy resin contains as a main component, the epoxy resin containing glycidylamine moieties derived from m-xylylenediamine and/or the epoxy resin containing glycidyl ether moieties derived from bisphenol F.

4. The gas-barrier container according to any of Claims 1 to 3, wherein the container is produced by forming a gas-barrier laminated film or sheet containing at least one flexible polymer layer and at least one gas-barrier layer into a desired shape.

5. The gas-barrier container according to claim 4, wherein the flexible polymer layer is a layer made of at least one thermoplastic resin selected from the group consisting of polyolefin-based resins, polyester-based resins, polyacrylonitrile-based resins, polystyrene-based resins and polyamide-based resins.

6. The gas-barrier container according to claim 4 or 5, wherein at least one of the flexible polymer layers is a layer made of a heat-sealable polymer.

7. The gas-barrier container according to any of claims 4 to 6, wherein a blending ratio between the epoxy resin and the epoxy resin-curing agent in the epoxy resin composition contained in the gas-barrier layer is controlled such that an equivalent ratio of active hydrogen contained in the epoxy resin-curing agent to epoxy groups contained in the epoxy resin is in the range of 1.5 to 3.0.

8. The gas-barrier container according to any of claims 4 to 7, wherein the epoxy resin-curing agent is the reaction product of m-xylylenediamine with methyl (meth) acrylate from which a part or whole of the unreacted component m-xylylenediamine is removed after the reaction between m-xylylenediamine and methyl (meth)acrylate.

9. The gas-barrier container according to Claim 1, wherein the hollow container is formed from a layer made of at least one thermoplastic resin selected from the group consisting of polyolefin-based resins, polyester-based resins, polyacrylonitrile-based resins, polystyrene-based resins and polyamide- based resins.

**Patentansprüche**

1. Gasbarrierebehälter, umfassend mindestens eine Gasbarriereschicht, die aus einem gehärteten Epoxyharz-Produkt hergestellt ist, das durch Härten einer Epoxyharz-Zusammensetzung geformt wird, die hauptsächlich ein Epoxyharz und ein Epoxyharz-Härtungsmittel enthält, und eine durch die Formel (1) dargestellte Gerüststruktur:

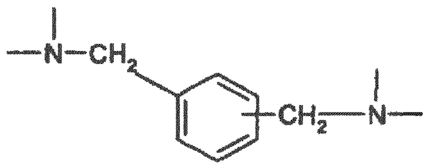

(1)

in einer Menge von 30 Gew.-% oder höher enthält, wobei die Gasbarriereschicht eine Sauerstoffpermeabilität von 2 mL • mm/$m^2$ • Tag • MPa oder weniger aufweist, gemessen bei einer Temperatur von 23 °C und einer relativen Feuchtigkeit von 60 %, wobei das Epoxyharz als Hauptkomponente das Epoxyharz enthält, das Glycidylamin-Einheiten enthält, die von m-Xylylendiamin abgeleitet sind,
dadurch charakterisiert,
dass das Epoxyharz-Härtungsmittel ein Reaktionsprodukt von m-Xylylendiamin mit Methyl(meth)acrylat ist, und dass der Behälter in Form eines Hohlbehälters vorliegt, bei dem 60 bis 100 % der Oberfläche von mindestens einer äußeren Oberfläche und einer inneren Oberfläche mit der Gasbarriereschicht beschichtet sind.

2. Gasbarrierebehälter nach Anspruch 1, wobei das Epoxyharz als Hauptkomponente mindestens ein Harz enthält, das ausgewählt wird aus der Gruppe, die besteht aus Diglycidylamin-Einheiten enthaltenden Epoxyharzen, die von m-Xylylendiamin abgeleitet sind, Diglycidylamin-Einheiten enthaltenden Epoxyharzen, die von 1,3-Bis(aminomethyl)cyclohexan abgeleitet sind, Diglycidylamin-Einheiten enthaltenden Epoxyharzen, die von Diaminodiphenylmethan abgeleitet sind, Diglycidylamin-Einheiten und/oder Glycidylether-Einheiten enthaltenden Epoxyharzen, die von p-Aminophenol abgeleitet sind, Diglycidylether-Einheiten enthaltenden Epoxyharzen, die von Bisphenol A abgeleitet sind, Diglycidylether-Einheiten enthaltenden Epoxyharzen, die von Bisphenol F abgeleitet sind, Diglycidylether-Einheiten enthaltenden Epoxyharzen, die von Phenolnovolak abgeleitet sind und Diglycidylether-Einheiten enthaltenden Epoxyharzen, die von Resorcinol abgleitet sind.

3. Gasbarrierebehälter nach Anspruch 2, wobei das Epoxyharz als Hauptkomponente das Epoxyharz enthält, das Glycidylamin-Einheiten enthält, die von m-Xylylendiamin abgeleitet sind und/oder das Epoxyharz, das Glycidylether-Einheiten enthält, die von Bisphenol F abgeleitet sind.

4. Gasbarrierebehälter nach einem der Ansprüche 1 bis 3, wobei der Behälter aus einem laminierten Gasbarrierefilm

oder einer -folie, die mindestens eine flexible Polymerschicht und mindestens eine Gasbarriereschicht aufweist, durch Formen zu einer gewünschten Form hergestellt wird.

**5.** Gasbarrierebehälter nach Anspruch 4, wobei die flexible Polymerschicht eine Schicht ist, die hergestellt wird aus mindestens einem thermoplastischen Harz, das ausgewählt wird aus der Gruppe, die aus Harzen auf Polyolefinbasis, Harzen auf Polyesterbasis, Harzen auf Polyacrylnitrilbasis, Harzen auf Polystyrolbasis und Harzen auf Polyamidbasis besteht.

**6.** Gasbarrierebehälter nach Anspruch 4 oder 5, wobei mindestens eine der flexiblen Polymerschichten eine Schicht ist, die aus einem hitzesiegelbaren Polymer hergestellt ist.

**7.** Gasbarrierebehälter nach einem der Ansprüche 4 bis 6, wobei ein Mischungsverhältnis zwischen dem Epoxyharz und dem Epoxyharz-Härtungsmittel in der Epoxyharz-Zusammensetzung, die in der Gasbarriereschicht enthalten ist, so kontrolliert wird, dass das Äquivalentverhältnis von aktivem Wasserstoff, der im Epoxyharz-Härtungsmittel enthalten ist, zu den Epoxygruppen, die im Epoxyharz enthalten sind, im Bereich von 1,5 bis 3,0 liegt.

**8.** Gasbarrierebehälter nach einem der Ansprüche 4 bis 7, wobei das Epoxyharz-Härtungsmittel das Reaktionsprodukt von m-Xylylendiamin mit Methyl(meth)acrylat ist, aus dem ein Teil oder alles der unreagierten Komponente m-Xylylendiamin nach der Reaktion zwischen m-Xylylendiamin und Methyl(meth)acrylat entfernt wird.

**9.** Gasbarrierebehälter nach Anspruch 1, wobei der hohle Behälter aus einer Schicht geformt wird, die aus mindestens einem thermoplastischen Harz hergestellt ist, das ausgewählt wird aus der Gruppe, die besteht aus Harzen auf Polyolefinbasis, Harzen auf Polyesterbasis, Harzen auf Polyacrylnitrilbasis, Harzen auf Polystyrolbasis und Harzen auf Polyamidbasis.

## Revendications

**1.** Conteneur à barrière de gaz comprenant au moins une couche à barrière de gaz fabriquée d'un produit durci d'une résine d'époxy qui est formé par le durcissement d'une composition d'une résine d'époxy contenant principalement une résine d'époxy et un agent de durcissement d'une résine d'époxy et contient une structure squelettique représentée par la formule (1) :

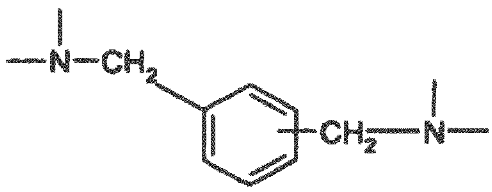

(1)

en une quantité de 30 % en poids ou plus, dans lequel la couche à barrière de gaz présente une perméabilité d'oxygène de 2 mL • mm/$m^2$ • jour • MPa ou moins comme mesurée à une température de 23 °C et une humidité relative de 60 %, dans lequel la résine d'époxy contient comme un composant principal la résine d'époxy contenant des fractions glycidylamine dérivées de m-xylylènediamine,
**caractérisé en ce que**
l'agent de durcissement d'une résine d'époxy est un produit de la réaction de la m-xylylènediamine avec du méthyl (méth)acrylate et
le conteneur est sous forme d'un conteneur creux, dans lequel 60 à 100 % d'une surface d'au moins une surface extérieure est une surface intérieure de celui-ci est revêtu avec la couche de barrière à gaz.

**2.** Conteneur à barrière de gaz selon la revendication 1, dans lequel la résine d'époxy contient comme composant principal au moins une résine sélectionnée parmi le groupe consistant en des résines d'époxy contenant des fractions de glycidylamine dérivées de la m-xylylènediamine, des résines d'époxy contenant des fractions de glycidylamine dérivées du 1,3-bis(aminométhyl)cyclohexane, des résines d'époxy contenant des fractions glycidylamine dérivées du diaminodiphénylméthane, des résines d'époxy contenant des fractions de glycidylamine et / ou des fractions d'éther glycidylique dérivées du p-aminophénol, des résines d'époxy contenant des fractions d'éther glycidylique dérivées du bisphénol A, des résines d'époxy contenant des fractions d'éther glycidylique dérivées du bisphénol F,

des résines d'époxy contenant des fractions d'éther glycidylique dérivées du phénol novolaque et des résines d'époxy contenant des fractions d'éther glycidylique dérivées de la résorcine.

**3.** Conteneur à barrière de gaz selon la revendication 2, dans lequel la résine d'époxy contient comme composant principal la résine d'époxy contenant des fractions de glycidylamine dérivées de la m-xylylènediamine et / ou la résine d'époxy contenant des fractions d'éther glycidylique dérivées du bisphénol F.

**4.** Conteneur à barrière de gaz selon l'une des revendications 1 à 3, dans lequel le conteneur est produit par la formation d'un film stratifié à barrière de gaz ou une feuille contenant au moins une couche d'un polymère flexible et au moins une couche à barrière de gaz d'une forme désirée.

**5.** Conteneur à barrière de gaz selon la revendication 4, dans lequel la couche d'un polymère flexible est une couche fabriquée d'au moins une résine thermoplastique sélectionnée parmi le groupe consistant en des résines à base de polyoléfine, des résines à base de polyester, des résines à base de polyacrylonitrile, des résines à base de polystyrène et des résines à base de polyamide.

**6.** Conteneur à barrière de gaz selon l'une des revendications 4 ou 5, dans lequel au moins l'une des couches d'un polymère flexible est une couche fabriquée d'un polymère thermosoudable.

**7.** Conteneur à barrière de gaz selon l'une des revendications 4 à 6, dans lequel un rapport de mélange entre la résine d'époxy et l'agent de durcissement d'une résine d'époxy dans la composition de résine d'époxy contenue dans la couche à barrière de gaz est contrôlé d'une façon qu'un rapport équivalent d'hydrogène actif contenu dans l'agent de durcissement d'une résine d'époxy aux groupes d'époxy contenus dans la résine d'époxy est dans la gamme de 1,5 à 3,0.

**8.** Conteneur à barrière de gaz selon l'une des revendications 4 à 7, dans lequel l'agent de durcissement d'une résine d'époxy est le produit de la réaction de la m-xylylènediamine avec du méthyl (méth)acrylate, une partie ou la totalité du composant de m-xylylènediamine qui n'a pas réagi étant en éliminé après la réaction entre de la m-xylylènediamine et du méthyl (méth)acrylate.

**9.** Conteneur à barrière de gaz selon la revendication 1, dans lequel le conteneur creux est formé d'une couche fabriquée d'au moins une résine thermoplastique sélectionnée parmi le groupe consistant en des résines à base de polyoléfine, des résines à base de polyester, des résines à base de polyacrylonitrile, des résines à base de polystyrène et des résines à base de polyamide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI71128621995 B